# EUROPÄISCHE PATENTSCHRIFT

(11) **EP 1 902 885 B1**
(45) Veröffentlichungstag und Bekanntmachung des Hinweises auf die Patenterteilung: **14.07.2010**
(21) Anmeldenummer: 06019985.8
(22) Anmeldetag: 25.09.2006
(51) Int. Cl.: B60J 7/043

(54) **Schiebedachsystem**
Sunroof system
Système de toit coulissant

(43) Veröffentlichungstag der Anmeldung: 26.03.2008
(73) Patentinhaber: ArvinMeritor GmbH, 63128 Dietzenbach (DE)
(72) Erfinder: Becher, Thomas, 63110 Rodgau (DE); Böhm, Horst, 60599 Frankfurt/Main (DE); Grimm, Rainer, 60598 Frankfurt/Main (DE); Röder, Joachim, 63165 Mühlheim (DE)
(74) Vertreter: Prinz & Partner

(56) Entgegenhaltungen:
- EP-A2- 1 393 944
- DE-C1- 4 301 635
- JP-A- 6 239 144
- JP-A- 6 336 116

## Beschreibung

Die Erfindung betrifft ein Schiebedachsystem mit mindestens einer Führungsschiene, einem Schlitten, der in der Führungsschiene verschiebbar ist, einem Deckelhalter, der durch Verschieben des Schlittens zwischen einer geschlossenen Stellung, einer angehobenen Lüfterstellung und einer abgesenkten, geöffneten Stellung verstellt werden kann, wobei der Deckelhalter mit Bolzen versehen ist, die in den Schlitten eingreifen, und wobei, in Draufsicht auf das Schiebedachsystem gesehen, der Schlitten außerhalb der Kontur des Deckels liegt. Ein solches Schiebedachsystem ist aus der DE 43 01 635 C1 bekannt.

Mit dem Deckelhalter des Schiebedachsystems ist ein Deckel verbunden, der in der geschlossenen Stellung des Schiebedachsystems eine Dachöffnung verschließt. In der Lüfterstellung ist der in Fahrtrichtung des Fahrzeugs gesehen hintere Rand des Deckels nach außen ausgestellt, und in der geöffneten Stellung ist der Deckel unter die hinter der Dachöffnung liegende Dachhaut nach hinten verschoben.

Allgemein wird bei solchen Schiebedachsystemen angestrebt, dass die vom Deckel freigegebene Öffnung, die nicht notwendigerweise mit der Dachöffnung identische sein muss, möglichst groß ist. Insbesondere ist es wünschenswert, dass die lichte Weite der Öffnung, die vom Fahrzeuginsassen wahrgenommen wird, also quer zur Fahrzeuglängsachse, so groß wie möglich ist.

Die Aufgabe der Erfindung besteht darin, ein Schiebedachsystem der eingangs genannten Art dahingehend weiterzubilden, dass sich eine besonders große lichte Weite der Öffnung ergibt.

Zu diesem Zweck ist gemäß der Erfindung bei einem Schiebedachsystem der eingangs genannten Art vorgesehen, dass die Führungsschiene eine Führungskulisse aufweist, in die der vordere Bolzen des Deckelhalters eingreift, wobei die Führungskulisse an ihrem vorderen Ende einen im wesentlichen vertikal nach unten verlaufenden Abschnitt aufweist. Vorzugsweise ist zwischen dem Deckelhalter und dem Schlitten, gemessen entlang der Längsachse der Bolzen, ein Freiraum vorgesehen, der insbesondere in der Größenordnung der Breite des Schlittens liegt. Die Erfindung beruht auf dem Grundgedanken, die Führungsschienen und die in ihnen aufgenommene Mechanik, insbesondere den Schlitten, weiter nach außen zu versetzen, so dass eine größere lichte Weite erhalten wird. Dabei beruht die Erfindung auf der Erkenntnis, dass zu diesem Zweck in mechanisch einfacher Weise die Bolzen des Deckelhalters so verlängert werden können, dass sie einfach den Freiraum überbrücken, der sich ergibt, wenn die Führungsschienen weiter außen angeordnet werden, während der Deckelhalter unverändert bleibt. Dies ist insofern überraschend, als man bisher davon ausgegangen war, dass die Bolzen am Deckelhalter möglichst kurz und daher der Schlitten möglichst nahe am Deckelhalter angeordnet sein sollte, damit sich eine hohe Stabilität ergibt.

Gemäß einer bevorzugten Ausführungsform der Erfindung ist vorgesehen, dass die Führungsschiene einen Kanal für ein Antriebskabel aufweist, wobei der Kanal vom Deckelhalter aus gesehen hinter dem Schlitten liegt. Auch diese Maßnahme trägt dazu bei, eine möglichst große lichte Weite der Öffnung zu erreichen. Die Antriebskabel liegen nun nicht mehr in einem Bereich, der für die lichte Weite kritisch ist, sondern "außen" seitlich der Schlitten.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 in einer schematischen Ansicht ein Fahrzeugdach mit einem Schiebedachsystem;
- Figur 2 das vordere Ende einer Führungsschiene des erfindungsgemäßen Schiebedachsystems;
- Figur 3 in einer perspektivischen Ansicht das erfindungsgemäße Schiebedachsystem;
- Figur 4 ein Detail des vorderen Endes des erfindungsgemäßen Schiebedachsystems, wobei zur besseren Übersichtlichkeit der Schlitten weggelassen wurde;
- Figur 5 in einer Ansicht von schräg oben das erfindungsgemäße Schiebedachsystem, wobei das angrenzende feste Dach weggelassen wurde;
- Figur 6 in einer perspektivischen Ansicht einen Deckelhalter mit Deckel eines erfindungsgemäßen Schiebedachsystems;
- Figur 7 einen Vergleich zwischen der lichten Weite bei dem erfindungsgemäßen Schiebedachsystem und einem herkömmlichen Schiebedachsystem;
- Figur 8 eine schematische Seitenansicht des erfindungsgemäßen Schiebedachsystems, wobei sich der Deckel in der geschlossenen Stellung befindet;
- Figur 9 das Schiebedachsystem von Figur 8, wobei sich der Deckel in der Lüfterstellung befindet; und
- Figur 10 das Schiebedachsystem von Figur 8, wobei sich der Deckel in der geöffneten Stellung befindet.

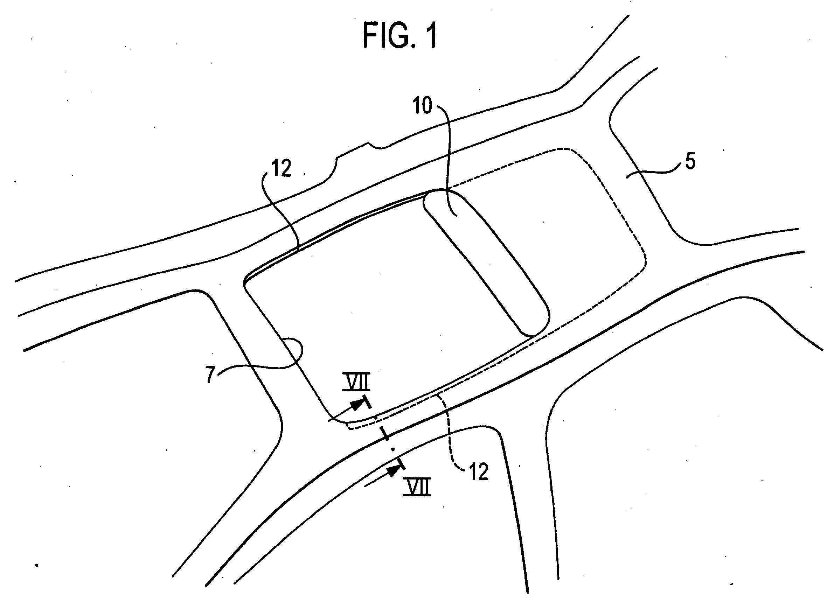

In Figur 1 ist ein Schiebedachsystem gezeigt, welches an einem Dach 5 eines Fahrzeugs angebracht ist. In der Dachhaut ist eine Dachöffnung 7 vorgesehen, die von einem Deckel 10 verschlossen oder freigegeben werden kann. In der Darstellung von Figur 1 befindet sich der Deckel 10 in einer fast vollständig geöffneten Stellung, in welcher er unter die Dachhaut des Daches 5 nach hinten verschoben ist.

Die hier verwendeten Begriffe wie "oben" oder "hinten" beziehen sich auf die übliche Fahrtrichtung und Ausrichtung eines Fahrzeugs. "Vorne" entspricht dabei der x-Richtung, "oben" der z-Richtung und "seitlich" der y-Richtung eines üblichen Koordinatensystems.

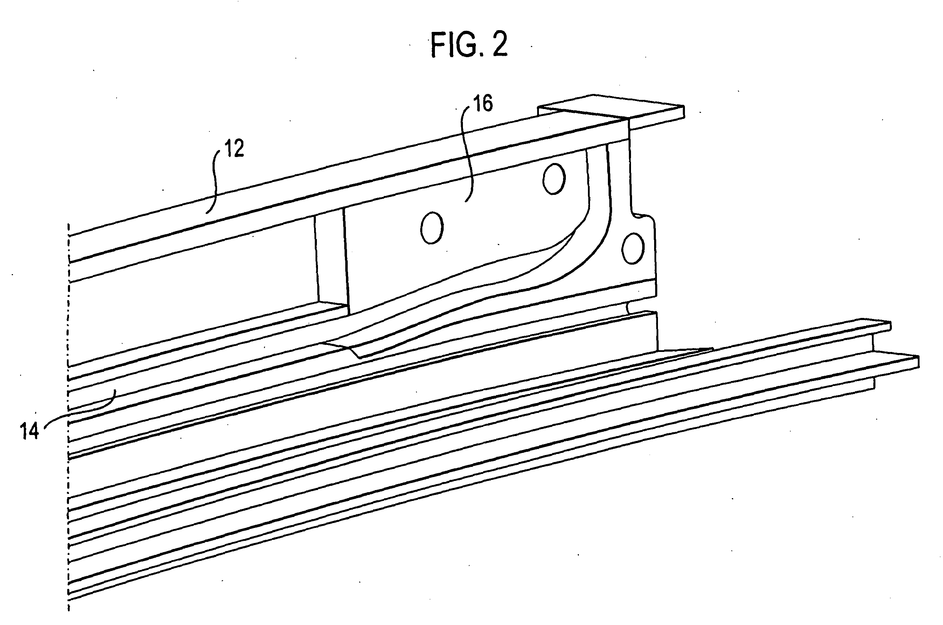

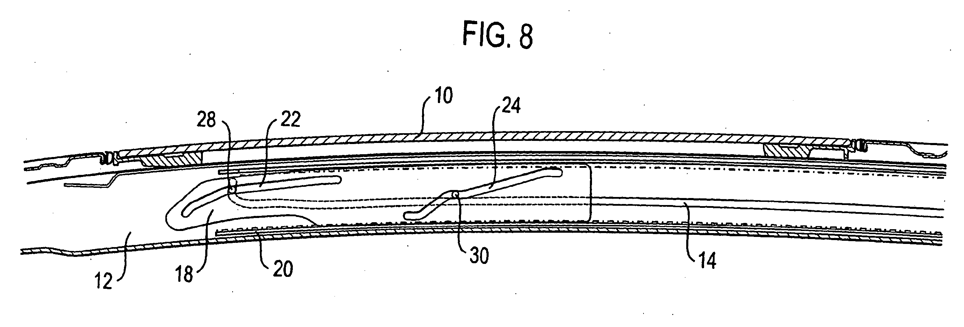

Entlang den Längsrändern der Dachöffnung 7 erstrecken sich Führungsschienen 12 (siehe auch Figur 2), in denen jeweils eine Führungskulisse 14 (siehe auch Figur 8) ausgebildet ist. Die Führungskulisse verläuft, betrachtet von vorne nach hinten, zunächst vertikal nach unten. Daran schließt sich ein gekrümmter Übergangsabschnitt an, an den sich wiederum ein etwa waagrecht verlaufender erster Abschnitt anschließt. Auf diesen folgt ein geringfügig schräg nach unten verlaufender Abschnitt, der wiederum gefolgt wird von einem sehr langen Abschnitt, der parallel zur Erstreckungsrichtung der entsprechenden Führungsschiene verläuft. Die Führungsschiene ist an ihrem vorderen Abschnitt mit einem Einsatzteil 16 (siehe Figur 2) versehen, welches all die Abschnitte der Führungskulisse 14 aufweist, die sich nicht parallel zur Erstreckungsrichtung der Führungsschiene 12 erstrecken. Dies ermöglicht, die Führungsschiene als durchgehend extrudiertes Teil herzustellen.

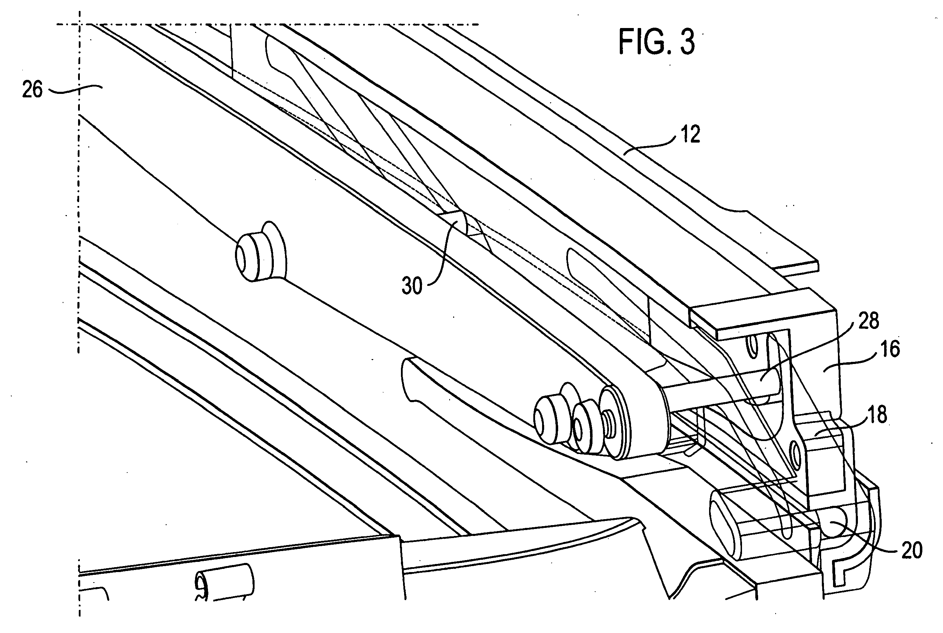

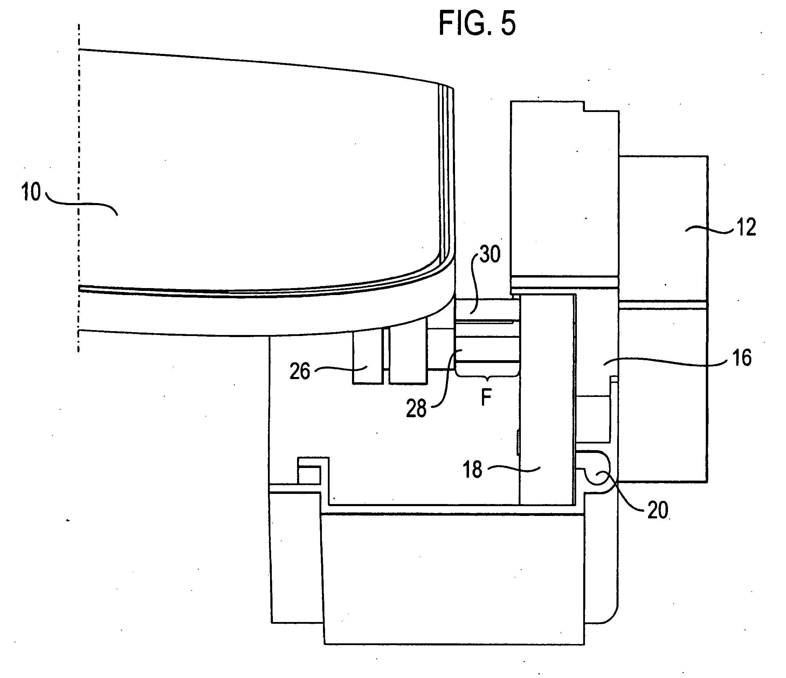

In jeder Führungsschiene ist verschiebbar ein Schlitten 18 (siehe insbesondere die Figuren 3 und 5) aufgenommen. Er kann in der entsprechenden Führungsschiene 12 durch ein (nicht dargestelltes) Antriebskabel verstellt werden, welches in einem Führungskanal 20 der Führungsschiene aufgenommen ist. Der Schlitten weist an seinem vorderen Ende eine Ausstellkulisse 22 (siehe insbesondere Figur 8) und an seinem hinteren Ende eine Hubkulisse 24 auf. Die Ausstellkulisse 22 weist, betrachtet von vorne nach hinten, einen ersten, vergleichsweise steil nach oben verlaufenden Abschnitt, daran anschließend einen zweiten, weniger steil nach oben verlaufenden Abschnitt und schließlich einen sich daran anschließenden dritten Abschnitt auf, der nochmals weniger steil verläuft als der zweite Abschnitt. Die Hubkulisse 24 weist, betrachtet von vorne nach hinten, einen waagrechten Abschnitt, einen schräg nach oben verlaufenden Abschnitt, einen waagrechten Zwischenabschnitt, einen wiederum schräg nach oben verlaufenden Abschnitt und einen waagrecht verlaufenden Endabschnitt auf. Der schräg verlaufende vordere Abschnitt hat eine größere Steigung als der schräg verlaufende hintere Abschnitt.

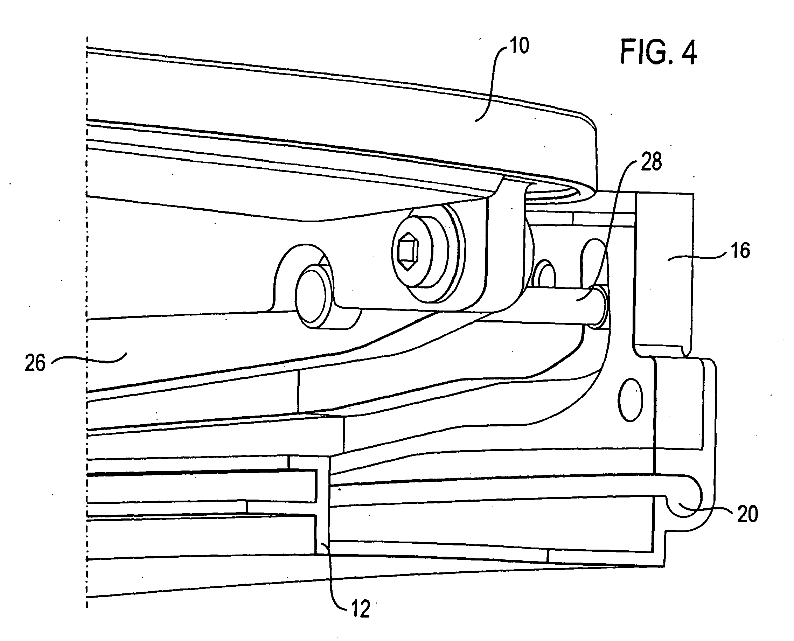

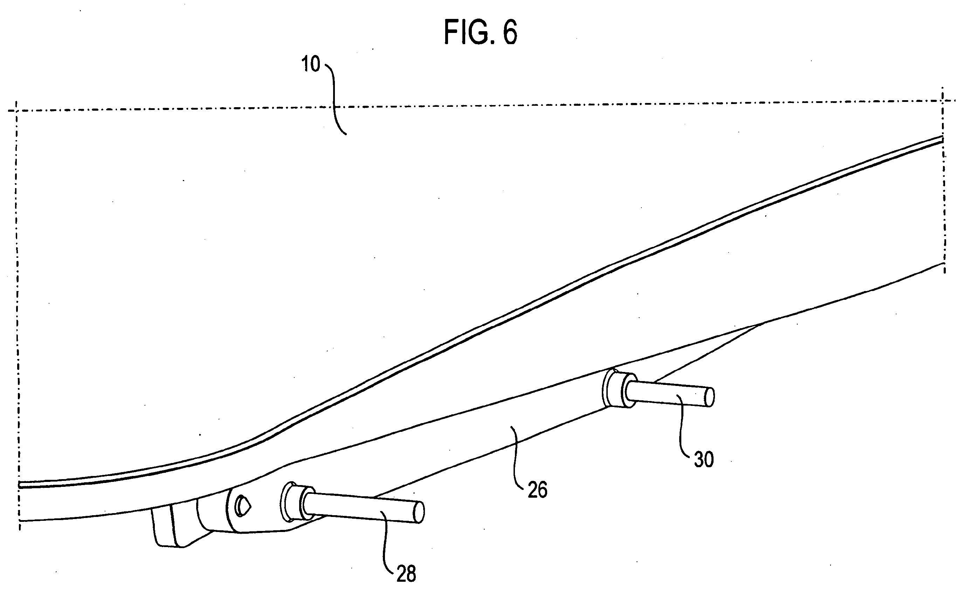

Mit dem Schlitten 18 und der Führungskulisse 14 jeder Führungsschiene 12 wirkt ein Deckelhalter 26 (siehe insbesondere die Figuren 3, 4 und 6) zusammen. An den beiden Deckelhaltern ist der Deckel 10 befestigt. Jeder Deckelhalter ist mit zwei Bolzen versehen, nämlich einem vorderen Bolzen 28 und einem hinteren Bolzen 30. Der vordere Bolzen 28 ist so lang ausgeführt, daß er durch die Ausstellkulisse 22 des Schlittens 18 hindurchtritt und sich bis in die Führungskulisse 14 der Führungsschiene 12 erstreckt (siehe insbesondere Figur 3). Der hintere Bolzen 30 ist so lang ausgeführt, daß er in die Hubkulisse 24 des Schlittens 18 eingreift.

In Draufsicht, d. h. von oben gesehen (vgl. Figur 5), ist der Schlitten 18 seitlich von der Außenkontur des Deckels 10 beabstandet und befindet sich unter der angrenzenden festen Dachhaut.

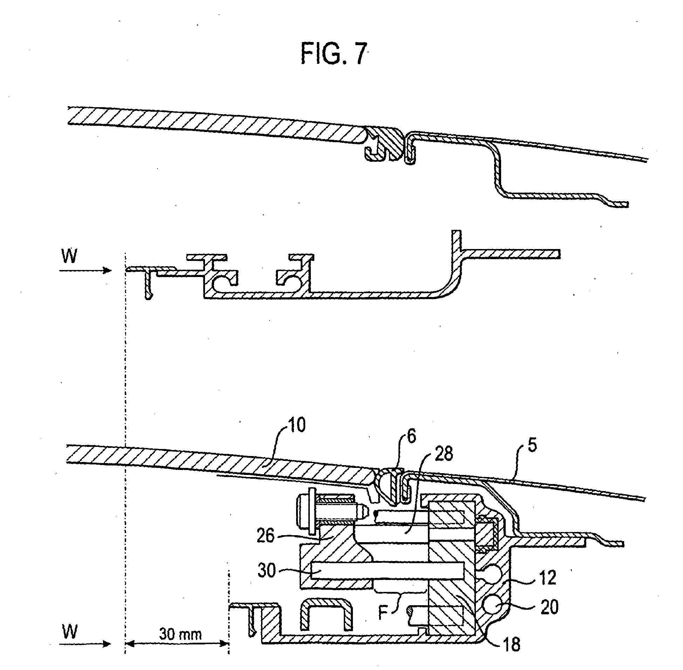

Wesentliches Merkmal des Schiebedachsystems ist, daß zwischen dem Deckelhalter 26 und dem Schlitten 18 ein Freiraum vorhanden ist, der von den Bolzen 28, 30 überbrückt wird. Dieser Freiraum ist insbesondere in Figur 5 zu sehen und mit dem Bezugszeichen F versehen. In Figur 5 sind der seitliche, feststehende Dachabschnitt 5 und die Dichtung 6 (vgl. Figur 7) zur Verdeutlichung weggelassen.

In Figur 7 ist zu sehen, welche Auswirkung die Verwendung des Freiraums F zwischen dem Deckelhalter 26 und dem Schlitten 18 hat. Im oberen Teil von Figur 7 ist eine herkömmliche Führungsschiene für ein herkömmliches Schiebedach gezeigt. Im unteren Abschnitt ist ein erfindungsgemäßes Schiebedachsystem im Schnitt gezeigt. Es ist zu sehen, daß die lichte Weite W, gemessen zwischen den beiden einander gegenüberliegenden Führungsschienen, beim erfindungsgemäßen Schiebedachsystem um etwa 30 mm auf jeder Seite größer ist, also insgesamt 60 mm. Dies stellt einen erheblichen Komfortgewinn für die Fahrzeuginsassen dar. In Figur 7 ist auch zu erkennen, daß die lichte Weite nicht von der Breite der Dachöffnung 7 bestimmt wird, sondern von den Führungsschienen des Schiebedachsystems.

Anhand der Figuren 8 bis 10 wird nun die Funktionsweise des Schiebedachsystems beschrieben. Im geschlossenen Zustand (siehe Figur 8) befindet sich der vordere Bolzen 28 des Deckelhalters 26 im vorderen, sich vertikal erstreckenden Abschnitt der Führungskulisse 14 und etwa in einem mittleren Abschnitt der Ausstellkulisse 22. Da sich die beiden Führungskulissen etwa im Winkel von 90° zueinander schneiden, ist der Bolzen 28 sowohl in x-Richtung als auch in z-Richtung festgelegt. Der hintere Bolzen 30 befindet sich im waagrecht verlaufenden Zwischenabschnitt der Hubkulisse 24. Somit ist er in z-Richtung festgelegt. Da zwei voneinander beabstandete Punkte des Deckelhalters in x-Richtung festgelegt sind und der Bolzen 28 zusätzlich in z-Richtung festgelegt ist, ist der Deckel 10 in der geschlossenen Stellung präzise positioniert.

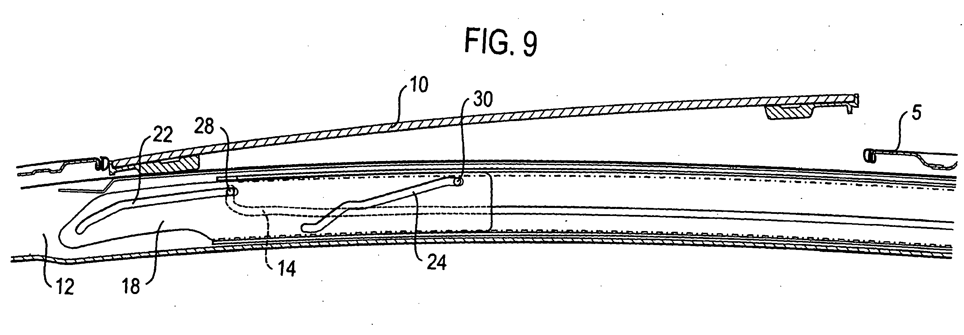

Um aus der geschlossenen Stellung in die in Figur 9 gezeigte Lüfterstellung zu gelangen, wird der Schlitten ausgehend von der in Figur 8 gezeigten Stellung nach vorne verschoben, also bezogen auf die Figuren 8 bis 10 nach links. Dabei wandert der hintere Bolzen 30 in der Hubkulisse 24 nach oben, während gleichzeitig der vordere Bolzen 28 von der Ausstellkulisse 22 geringfügig im vertikal verlaufenden Abschnitt der Führungskulisse 14 nach oben bewegt wird. Diese beiden Bewegungen überlagern sich so, daß der hintere Rand des Deckels nach außen ausgestellt wird, während der vordere Rand nur geringfügig nach unten abgesenkt wird.

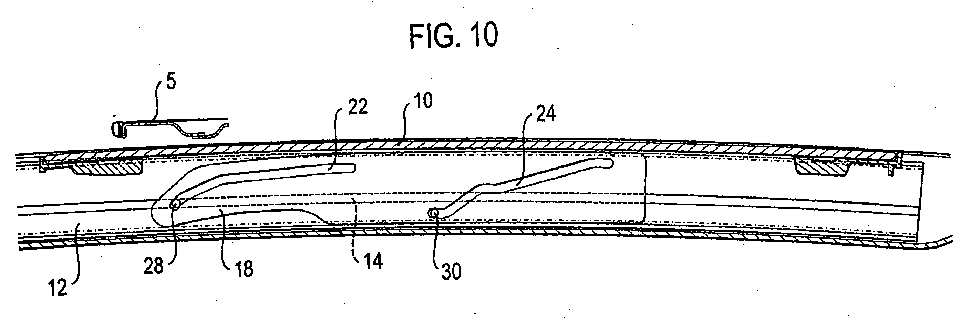

Die in Figur 10 gezeigte, geöffnete Stellung des Deckels wird ausgehend von der in Figur 8 gezeigten, geschlossenen Stellung erreicht. Ausgehend von der in Figur 8 gezeigten Stellung wird der Schlitten 18 in der Führungsschiene 12 nach hinten verstellt, also bezogen auf die Figuren 8 bis 10 nach rechts. Dabei wandert der hintere Bolzen 30 in der Hubkulisse 24 nach unten, und der vordere Bolzen 28 wandert in der Ausstellkulisse 22 und damit auch in der Führungskulisse 14 so weit nach unten, daß er in den etwa waagrecht verlaufenden Abschnitt der Führungskulisse 14 eintritt. Erst dann kann der vordere Bolzen 28 und mit ihm der Deckelhalter und der Deckel in den Führungsschienen nach hinten vom Schlitten 18 mitgenommen werden bis in die in Figur 10 gezeigte Stellung, in welcher der Deckel nahezu vollständig unter der Dachhaut des Fahrzeugdachs 5 liegt.

Zum Schließen des Deckels wird der Schlitten wieder nach vorne bewegt, bis der in Figur 8 gezeigte Zustand erreicht ist.

### Bezugszeichenliste:

- 5:: Dach
- 6:: Dichtung
- 7:: Dachöffnung
- 10:: Deckel
- 12:: Führungsschiene
- 14:: Führungskulisse
- 16:: Einsatzstück
- 18:: Schlitten
- 20:: Kanal für Antriebskabel
- 22:: Ausstellkulisse
- 24:: Hubkulisse
- 26:: Deckelhalter
- 28:: vorderer Bolzen
- 30:: hinterer Bolzen
- F:: Freiraum zwischen Deckelhalter und Schlitten
- W:: Lichte Weite

## Patentansprüche

1. Schiebedachsystem mit mindestens einer Führungsschiene (12), einem Schlitten (18), der in der Führungsschiene (12) verschiebbar ist, einem Deckelhalter (26), der mit dem Deckel (10) durch Verschieben des Schlittens (18) zwischen einer geschlossenen Stellung, einer angehobenen Lüfterstellung und einer abgesenkten, geöffneten Stellung verstellt werden kann, wobei der Deckelhalter (26) mit Bolzen (28, 30) versehen ist, die in den Schlitten eingreifen, wobei, in Draufsicht auf das Schiebedachsystem gesehen, der Schlitten (18) außerhalb der Kontur des Deckels (10) liegt, **dadurch gekennzeichnet, dass** die Führungsschiene (12) eine Führungskulisse (14) aufweist, in die der vordere Bolzen (28) des Deckelhalters (26) eingreift, wobei die Führungskulisse (14) an ihrem vorderen Ende einen im wesentlichen vertikal nach unten verlaufenden Abschnitt aufweist.

2. Schiebedachsystem nach Anspruch 1, **dadurch gekennzeichnet, dass** zwischen dem Deckelhalter (26) und dem Schlitten (18), gemessen entlang der Längsachse der Bolzen, ein Freiraum vorgesehen ist.

3. Schiebedachsystem nach Anspruch 2, **dadurch gekennzeichnet, dass** der Freiraum in der Größenordnung der Breite des Schlittens (18) liegt.

4. Schiebedachsystem nach einem der vorhergehenden Ansprüche, **dadurch gekennzeichnet, dass** der Deckelhalter (26) zwei Bolzen (28, 30) für jeden Schlitten (18) aufweist.

5. Schiebedachsystem nach einem der vorhergehenden Ansprüche, **dadurch gekennzeichnet, dass** der Deckelhalter (26) einen vorderen Bolzen (28) aufweist, der durch eine im Schlitten (18) ausgebildete Ausstellkulisse (22) hindurchragt und in eine in der Führungsschiene (12) ausgebildete Führungskulisse (14) eingreift.

6. Schiebedachsystem nach einem der vorhergehenden Ansprüche, **dadurch gekennzeichnet, dass** der Deckelhalter (26) einen hinteren Bolzen (30) aufweist, der in eine im Schlitten (18) ausgebildete Hubkulisse (24) eingreift.

7. Schiebedachsystem nach einem der vorhergehenden Ansprüche, **dadurch gekennzeichnet, dass** die Führungsschiene (12) einen Kanal (20) für ein Antriebskabel aufweist, wobei der Kanal vom Deckelhalter (26) aus gesehen hinter dem Schlitten (18) liegt.

8. Schiebedachsystem nach Anspruch 1, **dadurch gekennzeichnet, daß** die Führungskulisse (14) abschnittsweise durch ein an der Führungsschiene (12) angebrachtes Einsatzteil (16) definiert ist.

## Claims

1. Sunroof system with at least one guide rail (12), a carriage (18) which is displaceable in the guide rail (12), and a cover holder (26) which can be displaced together with the cover (10) between a closed position, a raised ventilation position and a lowered, open position by displacement of the carriage (18), wherein the cover holder (26) is provided with pins (28, 30) which engage in the carriage, and wherein, as seen in top view of the sunroof system, the carriage (18) is located outside the contour of the cover (10), **characterized in that** the guide rail (12) has a guide slot (14) in which the front pin (28) of the cover holder (26) engages, the front end of the guide slot (14) having a portion which runs substantially vertically downwards.

2. Sunroof system according to Claim 1, **characterized in that** a clearance, measured along the longitudinal axis of the pins, is provided between the cover holder (26) and the carriage (18).

3. Sunroof system according to Claim 2, **characterized in that** the clearance is of the order of magnitude of the width of the carriage (18).

4. Sunroof system according to one of the preceding claims, **characterized in that** the cover holder (26) has two pins (28, 30) for each carriage (18).

5. Sunroof system according to one of the preceding claims, **characterized in that** the cover holder (26) has a front pin (28) which projects through a deployment slot (22) formed in the carriage (18) and engages in a guide slot (14) formed in the guide rail (12).

6. Sunroof system according to one of the preceding claims, **characterized in that** the cover holder (26) has a rear pin (30) which engages in a lifting slot (24) formed in the carriage (18).

7. Sunroof system according to one of the preceding claims, **characterized in that** the guide rail (12) has a channel (20) for a driving cable, the channel being located behind the carriage (18), as seen from the cover holder (26).

8. Sunroof system according to Claim 1, **characterized in that** the guide slot (14) is defined in sections by an insert (16) which is attached to the guide rail (12).

## Revendications

1. Système de toit coulissant comprenant au moins un rail de guidage (12), un chariot (18), qui peut être déplacé dans le rail de guidage (12), un support de recouvrement (26), qui peut être déplacé avec le recouvrement (10) par coulissement du chariot (18) entre une position fermée, une position de ventilation soulevée et une position ouverte abaissée, le support de recouvrement (26) étant pourvu de boulons (28, 30) qui viennent en prise dans le chariot, le chariot (18), vu de dessus sur le système de toit coulissant, se trouvant en dehors du contour du recouvrement (10), **caractérisé en ce que** le rail de guidage (12) présente une coulisse de guidage (14), dans laquelle le boulon avant (28) du support de recouvrement (26) vient en prise, la coulisse de guidage (14) présentant sur son extrémité avant une portion s'étendant essentiellement verticalement vers le bas.

2. Système de toit coulissant selon la revendication 1, **caractérisé en ce qu'**un espace libre est prévu entre le support de recouvrement (26) et le chariot (18), mesuré le long de l'axe longitudinal des boulons.

3. Système de toit coulissant selon la revendication 2, **caractérisé en ce que** l'espace libre est de l'ordre de grandeur de la largeur du chariot (18).

4. Système de toit coulissant selon l'une quelconque des revendications précédentes, **caractérisé en ce que** le support de recouvrement (26) présente deux boulons (28, 30) pour chaque chariot (18).

5. Système de toit coulissant selon l'une quelconque des revendications précédentes, **caractérisé en ce que** le support de recouvrement (26) présente un boulon avant (28), qui traverse une coulisse de sortie (22) réalisée dans le chariot (18), et qui vient en prise dans une coulisse de guidage (14) réalisée dans le rail de guidage (12).

6. Système de toit coulissant selon l'une quelconque des revendications précédentes, **caractérisé en ce que** le support de recouvrement (26) présente un boulon arrière (30) qui vient en prise dans une coulisse de levage (24) réalisée dans le chariot (18).

7. Système de toit coulissant selon l'une quelconque des revendications précédentes, **caractérisé en ce que** le rail de guidage (12) présente un canal (20) pour un câble d'entraînement, le canal étant situé derrière le chariot (18), vu depuis le support de recouvrement (26).

8. Système de toit coulissant selon la revendication 1, **caractérisé en ce que** la coulisse de guidage (14) est définie en partie par une partie d'insertion (16) montée sur le rail de guidage (12).
